# EUROPEAN PATENT SPECIFICATION

(11) **EP 4 407 057 B1**
(45) Date of publication and mention of the grant of the patent: **01.07.2026**
(21) Application number: 23842150.7
(22) Date of filing: 11.07.2023
(51) Int. Cl.: C22C 1/03, C22F 1/057, C22C 1/02, C22C 21/16

(54) **HIGH-STRENGTH AND HIGH-TOUGHNESS AL-CU SERIES CAST ALUMINUM ALLOY, PREPARATION METHOD THEREFOR, AND USE OF SAME IN WHEEL HUB MANUFACTURING**
HOCHFESTE UND HOCHZÄHE ALUMINIUMGUSSLEGIERUNG DER AL-CU-SERIE, HERSTELLUNGSVERFAHREN DAFÜR UND VERWENDUNG DAVON IN DER RADNABENHERSTELLUNG
ALLIAGE D'ALUMINIUM COULÉ DE LA SÉRIE AL-CU À HAUTE RÉSISTANCE ET À HAUTE TÉNACITÉ, PROCÉDÉ DE PRÉPARATION DE CELUI-CI ET UTILISATION DE CELUI-CI DANS LA FABRICATION DE MOYEUX DE ROUE

(30) Priority: 18.07.2022 CN 202210842425
(43) Date of publication of application: 31.07.2024
(73) Proprietor: Shandong Haoxin Co., Ltd., Weifang, Shandong 261300 (CN); Longda Aluminium (Yantai) Co., Ltd., Yantai, Shandong 264006 (CN); Shandong Haoxin New Energy Auto Parts Co., Ltd., Weifang, Shandong 261300 (CN); Hebei Xinlizhong Nonferrous Metal Group Co., Ltd., Baoding, Hebei 071100 (CN)
(72) Inventor: GAO, Shiyang, Weifang, Shandong 261300 (CN); LIU, Yongchang, Weifang, Shandong 261300 (CN); YANG, Kebing, Weifang, Shandong 261300 (CN); LI, Hao, Weifang, Shandong 261300 (CN); LIU, Xiaoqing, Weifang, Shandong 261300 (CN); GAO, Haitao, Weifang, Shandong 261300 (CN); GE, Sujing, Weifang, Shandong 261300 (CN); WANG, Ji, Weifang, Shandong 261300 (CN); HUO, Chenming, Weifang, Shandong 261300 (CN); YUAN, Gaoli, Weifang, Shandong 261300 (CN); MAO, Yiguo, Weifang, Shandong 261300 (CN); SUN, Keming, Weifang, Shandong 261300 (CN); ZHANG, Chunlong, Weifang, Shandong 261300 (CN); WANG, Haoxin, Weifang, Shandong 261300 (CN); YUE, Zhongzheng, Weifang, Shandong 261300 (CN); ZHAO, Qinghua, Weifang, Shandong 261300 (CN); LI, Yong, Weifang, Shandong 261300 (CN)
(74) Representative: Murgitroyd & Company
(86) International application number: PCT/CN2023/106671
(87) International publication number: WO 2024/017085

(56) References cited:
- CN-A- 102 002 617
- CN-A- 102 002 617
- CN-A- 105 483 477
- CN-A- 109 182 804
- CN-A- 109 182 804
- CN-A- 112 157 220
- CN-A- 115 786 787
- FR-A- 1 039 856
- JP-A- 2010 196 112
- US-A1- 2001 006 082

## Description

### Technical Field

The present invention belongs to the field of non-ferrous metal alloy material preparation technology, and specifically relates to a high-strength and high-toughness Al-Cu series cast aluminum alloy, a preparation method therefor, and a use of the same in wheel hub manufacturing.

### Background

Compared with steel, aluminum alloys have the advantages of high specific strength, high specific stiffness, good thermal conductivity, good corrosion resistance, strong shock absorption capability, etc., making them ideal lightweight materials in the transportation industry. Wheel hub components on transportation vehicles belong to chassis components and unsprung components in vehicles, have a significant fuel-saving effect after weight reduction, but are currently still based on cast iron materials, making them next important lightweight target components.

The wheel hub components have high requirements for mechanical properties of materials because of bearing complex alternating stresses, need relatively low manufacturing costs under harsh market competition conditions, and also need to reduce the carbon footprint value as much as possible, making it difficult for ordinary aluminum alloys to meet the requirements. 201Z.5 alloy (ZLD205A) in GB/T8733: 2016 is an alloy having the highest strength among cast aluminum alloys, with mechanical properties similar to those of current cast iron materials in use. However, its material cost is high, and its Cd element content exceeds the requirement of less than 0.01% in national and international automotive prohibited substance standards. Meanwhile, its market promotion is very difficult due to its poor casting performance, difficult metal mold casting, use of sand mold casting for the majority, and low production efficiency. CN 109136697 B, CN 111041304. B, and CN 111020321. B series patents, and CN 109182804 A application of Lanzhou Flight Control Co., Ltd., CN 1013163092 B, CN 101363093 B, CN 101319287 B, and CN 1013163094 B series patents of Guizhou Aluminum Factory, Guizhou University, and Guizhou Academy of Sciences, and CN 102002617 B patent of Hebei Lizhong Nonferrous Metals Group Co., Ltd. have all been improved on the basis of ZLD205A alloy and achieved some technical effects, but their production site control is difficult and their batch production and use are limited.

Therefore, developing a low-cost, high-strength and high-toughness Al-Cu series cast aluminum alloy to satisfy the market requirements for aluminum alloy parts such as vehicle wheel hubs is of great significance in accelerating weight reduction of vehicles, achieving energy conservation and emission reduction, and achieving the strategic goal of "carbon peaking and carbon neutrality".

### Summary

In view of this, the present invention aims to provide a high-strength and high-toughness Al-Cu series cast aluminum alloy with low cost, strong process inclusiveness, and suitability for metal mold casting, a preparation method therefor, and a use of the same in wheel hub manufacturing. The invention is defined by the appended claims.

Technical solutions provided by the present invention are as follows:

### <First aspect>

A high-strength and high-toughness Al-Cu series cast aluminum alloy, chemical components of the high-strength and high-toughness Al-Cu series cast aluminum alloy include the following elements in percentage by mass: 4.6-5.3% of Cu, 0.45-0.55% of Mn, 0.42-0.55% of Mg, 0.15-0.25% of Ti, 0.05-0.15% of Zr, and 0.001-0.02% of B.

The mass ratio of Cu: Mg is (8-12): 1.

The chemical components of the high-strength and high-toughness Al-Cu series cast aluminum alloy further include Fe and Si in percentage by mass, where 0.03 < Fe ≤ 0.2% and the mass ratio of Fe: Si is (2-6): 1; and the balance being Al and inevitable impurities.

Preferably, 0.05 < Fe ≤ 0.15%.

The impurities include V ≤ 0.05%, Ga ≤ 0.03%, Ni ≤ 0.01%, Zn ≤ 0.03%, P ≤ 0.002%, Be ≤ 0.0008%, and Sn ≤ 0.01%.

Raw materials of the high-strength and high-toughness Al-Cu series cast aluminum alloy include several of aluminum, copper, manganese, magnesium, Al-Cu intermediate alloy, Al-Mn intermediate alloy, Al-Mg intermediate alloy, Al-Ti intermediate alloy, Al-Zr intermediate alloy, Al-Ti-B intermediate alloy, Al-B intermediate alloy, K₂TiF₆, KBF₄, and K₂ZrF₆.

As an implementation of the present invention, the raw materials of the high-strength and high-toughness Al-Cu series cast aluminum alloy include a combination of several materials among aluminum ingots, molten aluminum, copper (cathode copper, etc.), metal manganese (electrolytic metal manganese), magnesium ingots, recycled aluminum alloy, Al-Cu intermediate alloy, Al-Mn intermediate alloy, Al-Mg intermediate alloy, Al-Ti intermediate alloy, Al-Zr intermediate alloy, Al-Ti-B intermediate alloy, Al-B intermediate alloy, K₂TiF₆, KBF₄, and K₂ZrF₆. Recycled aluminum alloy in the testing process of this product can also be used.

### <Second aspect>

The present invention further provides a preparation method for a high-strength and high-toughness Al-Cu series cast aluminum alloy, including the following steps:
A. selecting raw materials, calculating and weighing the amount of each raw material according to predetermined alloy components, melting and casting the raw materials to obtain alloy ingots or bars, and producing billets; and
B. thermally treating and cooling in air the billets to obtain the high-strength and high-toughness Al-Cu series cast aluminum alloy.

Further, step A includes the follows steps:
A1. melting and alloying aluminum ingots, copper, and Al-Mn intermediate alloy, heating the molten alloy to 750-770°C, and preserving the heat for 30-60 min, where the content of Fe and Si elements is adjusted: raw aluminum generally contains Fe and Si elements, so high-purity aluminum can be added for content control if the content of the two elements is too high, or Fe and Si elements can be added in an appropriate amount if the content of the two elements is too low;
A2. adding Al-Ti intermediate alloy and Al-Zr intermediate alloy, adjusting the temperature to 740-750°C, and alloying;
A3. removing slag and refining with a refining agent;
A4. adding magnesium ingots, adjusting the temperature to 730-750°C, and alloying;
A5. introducing inert gas for refining for 15-30 min, and adding pre-heated and dried Al-Ti-B intermediate alloy 8-10 min before the refining stops to prepare molten alloy; and
A6. controlling the molten alloy to be cast into alloy ingots at 700-730°C, producing billets, and controlling the cooling rate of the billets at 0.5-10°C/s.

The thermal treatment of the billets in step B specifically includes: first performing solution treatment on the billets at 515-525°C and preserving the heat for 8-20 hours; then performing artificial aging treatment at 175-185 °C, preserving the heat for 4-20 hours, and then cooling in air.

As an implementation of the present invention, the preparation method for the high-strength and high-toughness Al-Cu series cast aluminum alloy includes the following steps:
(1) selecting main raw materials (aluminum ingots for re-melting, cathode copper, and Al-Mn intermediate alloy, where the main raw materials may also include recycled alloys for this type of product), and calculating and weighing the amount of each raw material according to predetermined alloy components;
(2) melting and alloying the main raw materials in step (1), heating the molten alloy to 750-770°C, and preserving the heat for 30 min or more;
(3) adding intermediate alloys or salts containing Ti and Zr elements (Al-Ti intermediate alloy and Al-Zr intermediate alloy), adjusting the temperature to 740-750°C, and alloying;
(4) removing slag and refining with a salt refining agent, and then cleaning dross;
(5) adding magnesium ingots, adjusting the temperature to 730-750°C, and alloying;
(6) testing process components and adjusting the same to set components;
(7) introducing inert gas for refining for 20 min, and adding pre-heated, dried, and rolled or extruded aluminum titanium boron alloy 10 min before the gas refining stops, where the inert gas may be argon/nitrogen having a purity of 99.993% or more;
(8) removing surface dross, standing and refining for 5-15 min, where
   the gas content of the refined alloy satisfies at least one of the following conditions:
   pinholes achieve the second level of JB/T7946.3 or above;
   or the density is greater than 2.78 g/cm³ under vacuum solidification conditions;
   or the density equivalent (difference between solidification density under normal pressure conditions and density under vacuum solidification conditions)/solidification density under normal pressure conditions) × 100% is less than 1.5%;
   or the hydrogen content of molten aluminum is less than 0.20 ml/100 g Al;
(9) casting: controlling the molten aluminum to be cast at 700-730°C into alloy ingots or bars for re-melting, and producing billets, where the cooling rate of the tensile billets is 0.5-10°C /s; and
(10) thermal treatment for the casting: performing solution treatment at 515-525 °C (uniformity of a temperature field in a solution furnace ± 3°C), and preserving the heat for 8-20 hours; transferring workpieces for ≤ 16 s, and cooling at a rate of 10-30 °C /s when the temperature of the workpieces is 300°C or more; and performing artificial aging treatment at 175-185°C (uniformity of a temperature field in an aging furnace ± 3°C), preserving the heat for 4-20 hours, and then cooling in air.

### <Third aspect>

A use of the high-strength and high-toughness Al-Cu series cast aluminum alloy in wheel hub manufacturing also falls within the scope of protection of the present invention.

The present invention is based on the following principle:
The ultimate solubility of Cu in α (Al) is 5.7%. As the Cu content increases, the solution and aging strengthening effects are stronger, the tensile strength increases, but the elongation decreases. To ensure strength and toughness, the presence of excess Al₂Cu phase at grain boundaries should be reduced as much as possible.

Adding Mn to Al-Cu alloy can form a T (Al₁₂Mn₂Cu) phase, thereby increasing the amount of eutectic in the structure, improving the hot cracking tendency of the alloy during solidification, increasing the tensile strength during aging precipitation, and decreasing the elongation. Research of the present invention found that when the addition amount (mass percentage) of Mn in an Al-5Cu series alloy exceeds 0.6%, residual T (Al₁₂Mn₂Cu) phase with coarse needle-like morphology appears at grain boundaries after solution treatment to significantly decrease the elongation. When the content (mass percentage) of Mn exceeds 1%, the probability of forming a coarse brittle compound (FeMn)Al₆ increases to reduce the mechanical and process properties of the alloy.

The intergranular corrosion phenomenon of the Al-Cu alloy is severe, and the intergranular corrosion will reduce the fatigue performance of the alloy. Adding a certain amount of Mg element to the Al-Cu alloy can reduce the intergranular corrosion phenomenon of the alloy. However, when the mass ratio of Cu/Mg in the alloy is ≤ 2.6, the strengthening effect of formed S (Al₂CuMg) is higher than that of Al₂Cu, which will significantly decrease the elongation. The research of the present invention found that when the mass ratio of Cu/Mg in the alloy is 8-12, the Al₂Cu phase is still dominant in the alloy, with only a small amount of S (Al₂CuMg) phase, which not only ensures the elongation but also reduces the intergranular corrosion phenomenon of the alloy. The Mg content has a significant impact on the solidus of Al-5% Cu alloy. Researchers further found that when the Mg content (mass percentage) is within 1%, the solidus of the alloy shows a linear decreasing trend from α (Al) + Al₂Cu binary eutectic temperature 548°C to α (Al) + Al₂Cu + S (Al₂CuMg) ternary eutectic temperature 507°C. Therefore, the Mg content is not only a key and important factor determining the temperature of the solution treatment process, but also a key factor affecting the hot cracking tendency of the alloy as the Mg content increases and the solidification temperature range of the alloy is further widened. In the studies of the present invention, it was found that the higher the Mg content, the greater the hot cracking tendency. Therefore, the use of the Mg element in the Al-Cu alloy to optimize various performances requires more scientific and technological analysis and experimental selection.

Fine crystallization can not only improve the mechanical properties of the alloy, but also reduce the hot cracking tendency. Grain refining elements are also an important factor affecting material costs. This project meets performance requirements by optimizing the ratio of cost-effective elements such as Ti, Zr, and B, without selecting rare and precious metals such as Sc and V. Meanwhile, the segregation phenomenon of refining elements is controlled to be adapted to the re-melting and casting processes.

Fe and Si are main impurity elements in electrolytic aluminum raw materials and determine the selection of raw materials and material costs, the lower their content, the higher the material grade and cost. Fe can form an α (Al)-insoluble AlCuMnFe compound with Cu and Mn in the alloy, so that Cu and Mn in α (Al) are reduced, and the mechanical properties at room temperature and high temperature are reduced. The presence of a small amount of Si in the Al-Cu alloy is beneficial to the casting performance and density of the alloy, and can improve the hot cracking tendency. Experimental research found that the Fe/Si ratio is also a key factor affecting the structure and properties of the alloy. When Si > 1/2 Fe, it is easy to form a β (Al₉Si₂Fe₂) phase, which affects the elongation of the alloy. When Si = (1/6 - 1/2) Fe, it is easier to form an α-AlFeSi phase, which has a little impact on the mechanical properties at room temperature and can reduce the thermal brittleness of the alloy. The research of the present invention found that when the Si content in the Al-Cu-Mg series alloy reaches 0.08% or more, α (Al) + Si + Al₂Cu + W (AlxCu₄Mg₅Si₄) quaternary eutectic reaction will occur at around 505°C. To avoid over-burning, it is necessary to lower the solution treatment process temperature, which will lower the ultimate solubility of the Al-Cu-Mg alloy, thereby reducing the solution and aging strengthening effects of the Cu-containing phase. Therefore, reasonable control on the Si content is required.

Ni and Cu form an AlCuNi insoluble compound, which reduces the number of strengthening phases Al₂Cu, Al₂CuMg, and Al₁₂Mn₂Cu and the mechanical properties, so their content needs to be controlled.

Zn has a little impact on the room temperature properties of the alloy, but greatly reduces the thermal strength of the alloy. Meanwhile, Zn can increase the tendency to form hot cracks during casting, so its content needs to be controlled.

The purity of an alloy is a key factor affecting the mechanical properties of a casting. The main factors that reduce the purity of the alloy are non-metallic inclusions and dissolved gases (mainly hydrogen). Diaphragm-like non-metallic inclusions in the alloy, especially folded bi-films affect the quality of the aluminum alloy casting. From a macro perspective. a large number of small flaky bi-films are small cracks that cut a metal matrix apart, which not only reduce the mechanical properties such as tensile strength, yield strength, elongation, impact resistance, and fatigue strength, but also induce casting defects such as pores and small shrinkage cavities. From a microscopic perspective, reducing the refining effect of grain refining agents will increase the grain size and secondary dendrite spacing. Consequently, the density is reduced and the airtightness (of wheels) is affected. The influence of dissolved gases is mainly due to gas precipitation in the solidification process, with small ones forming micro porosity and large ones forming pinholes. This not only forms stress concentration, but also directly reduces the effective stress area and reduces mechanical and physical properties and corrosion resistance of the alloy. Generally, for every level increase in pinhole grade, the mechanical property 6b decreases by about 3%, and δ5 decreases by about 5%. The wide crystallization temperature range of the Al-Cu alloy is prone to a decrease in various properties due to the formation of micro porosity. Therefore, the purity of the alloy must be ensured, thereby reducing the decrease in the properties of the alloy due to non-metallic inclusions and pinholes, and even reducing the damage to the matrix due to more micro porosity induced by non-metallic inclusions and gas precipitation. According to the mechanism of slag-gas symbiosis, the purity of molten aluminum, namely, the refining effect of the alloy should be evaluated on site by a pinhole method or equivalent methods such as reduced pressure density, density equivalent, and hydrogen content of molten aluminum.

The quenching cooling rate has a strong impact on the corrosion resistance of the alloy. The higher the quenching cooling rate, the smaller the strength loss of the alloy, and the better the corrosion resistance. However, the higher the quenching cooling rate, the greater the probability of casting deformation.

To promote widespread market application of the material of the present invention, rare earth elements that belong to national strategic resources are not selected.

The high-strength and high-toughness Al-Cu series cast aluminum alloy has low cost, satisfies the market requirements on aluminum alloy parts such as vehicle wheel hubs, and therefore is of important significance in accelerating weight reduction of vehicles and achieving the objects of energy conservation and emission reduction.

Beneficial effects achieved by the present invention are as follows:
1. The alloy has a tensile strength of ≥ 450 Mpa, a yield strength of ≥ 320 Mpa, an elongation of ≥ 12%, and a hardness of HB115-135 in a metal mold single cast test bar in a T6 state;
2. The alloy is suitable for a metal mold casting process;
3. The production of the alloy does not use high-priced materials such as refined aluminum, national strategic rare earth materials, or high-value V elements, which reduces production costs;
4. The component range and impurity content control process of the alloy has strong inclusiveness, which reduces the difficulty of on-site production process control, improves production efficiency, and reduces production costs;
5. The alloy meets the requirements of national and international standards for prohibited substances in automobiles.

### Brief Description of Figures

Other features, objectives, and advantages of the present invention will become more apparent by reading detailed descriptions of non-limiting embodiments with reference to the following accompanying drawings:
FIG. 1 shows a metallographic structure of sample T6 after treatment in Example 1 (optical microscope);
FIG. 2 shows a metallographic structure of sample T6 after treatment in Example 1 (scanning electron microscope);
FIG. 3 shows a cast metallographic structure of a sample in Example 1 (optical microscope);
FIG. 4 shows a metallographic structure of sample T6 after treatment in Comparative Example 2 (optical microscope);
FIG. 5 shows an image of a hot cracking sample in Example 1;
FIG. 6 shows an image of a hot cracking sample in Comparative Example 4;
FIG. 7 shows a thermal analysis diagram in Example 1 (Si 0.057, solidus 522°C);
FIG. 8 shows a thermal analysis diagram in Comparative Example 3 (Si 0.08, Fe/Si = 1.5, solidus 505°C); and
FIG. 9 shows a thermal analysis diagram in Comparative Example 4 (Mg 0.67, solidus 513.7°C).

### Detailed Description

The present invention will be described in detail below in conjunction with examples. The following examples are helpful for those skilled in the art to further understand the present invention, but are not intended to limit the present invention in any way. It should be pointed out that those of ordinary skill in the art can also make adjustments and improvements without departing from the concept of the present invention. These adjustments and improvements fall within the scope of protection of the present invention.

In the examples and comparative examples, raw materials of an alloy include a combination of aluminum ingots (GB/T 1196) or molten aluminum for re-melting, cathode copper (GB/T 467), electrolytic metal manganese (YB/T 051), primary magnesium ingots (GB/T3499), recycled aluminum alloy, Al-Cu intermediate alloy, Al-Mn intermediate alloy, Al-Mg intermediate alloy, Al-Ti intermediate alloy, Al-Zr intermediate alloy, Al-Ti-B intermediate alloy, Al-B intermediate alloy, K₂TiF₆, KBF₄, and K₂ZrF₆.

### Examples 1-9

Examples 1-9 provide a high-strength and high-toughness Al-Cu series cast aluminum alloy and a preparation method therefor. Chemical components and content of the alloy in Examples 1-9 are shown in Table 1.

**Table 1 (Unit: mass percentage %)**

| Component | | Example 1 | Example 2 | Example 3 | Example 4 | Example 5 | Example 6 | Example 7 | Example 8 | Example 9 |
|---|---|---|---|---|---|---|---|---|---|---|
| Alloy component | Cu | 5.1 | 4.6 | 5.0 | 5.2 | 4.7 | 5.3 | 5.2 | 4.7 | 4.9 |
| | Mg | 0.45 | 0.54 | 0.42 | 0.54 | 0.46 | 0.55 | 0.44 | 0.54 | 0.46 |
| | Mn | 0.51 | 0.54 | 0.47 | 0.46 | 0.45 | 0.55 | 0.54 | 0.46 | 0.51 |
| | Ti | 0.17 | 0.25 | 0.18 | 0.16 | 0.18 | 0.17 | 0.15 | 0.17 | 0.20 |
| | Zr | 0.09 | 0.05 | 0.08 | 0.10 | 0.11 | 0.12 | 0.15 | 0.09 | 0.10 |
| | B | 0.004 | 0.005 | 0.011 | 0.008 | 0.006 | 0.003 | 0.004 | 0.005 | 0.004 |
| | Fe | 0.15 | 0.06 | 0.12 | 0.15 | 0.05 | 0.12 | 0.10 | 0.03 | 0.20 |
| | Si | 0.05 | 0.01 | 0.03 | 0.03 | 0.02 | 0.06 | 0.04 | 0.01 | 0.07 |
| | Ni | 0.009 | 0.009 | 0.010 | 0.013 | 0.010 | 0.010 | 0.010 | 0.009 | 0.010 |
| | Zn | 0.026 | 0.025 | 0.030 | 0.027 | 0.030 | 0.029 | 0.025 | 0.028 | 0.030 |
| | Sn | 0.009 | 0.009 | 0.010 | 0.010 | 0.012 | 0.010 | 0.009 | 0.012 | 0.010 |
| | Be | 0.0007 | 0.0007 | 0.0007 | 0.0008 | 0.0007 | 0.0007 | 0.0008 | 0.0008 | 0.0008 |
| | P | 0.0018 | 0.0022 | 0.0019 | 0.0024 | 0.0020 | 0.0020 | 0.0020 | 0.0023 | 0.0019 |
| | V | 0.027 | 0.031 | 0.025 | 0.029 | 0.026 | 0.032 | 0.028 | 0.031 | 0.029 |
| | Ga | 0.025 | 0.029 | 0.032 | 0.028 | 0.027 | 0.033 | 0.031 | 0.028 | 0.034 |
| | Al | balance | balance | balance | balance | balance | balance | balance | balance | balance |

**The preparation method in Examples 1-9 was as follows:**
(1) Aluminum ingots for re-melting (GB/T 1196), cathode copper (GB/T 467), primary magnesium ingots (GB/T3499), Al-Mn intermediate alloy, Al-Ti intermediate alloy, Al-Zr intermediate alloy, and Al-Ti-B intermediate alloy were selected as raw materials and weighed, where the content of Fe and Si elements was adjusted as follows: raw aluminum generally contains Fe and Si elements, so high-purity aluminum can be added for content control if the content of the two elements was too high, or Fe and Si elements can be added in an appropriate amount if the content of the two elements was too low;
(2) The aluminum ingots for re-melting, the cathode copper, and the Al-Mn intermediate alloy were melted and alloyed, the molten alloy was heated to 750-770°C, and the heat was preserved for 30 min or more;
(3) The Al-Ti intermediate alloy and the Al-Zr intermediate alloy were added, and the temperature was adjusted to 740-750°C, followed by alloying;
(4) Slag removal and refining were performed with an A3 refining agent of Lizhong Sitong Company, and then dross was cleaned;
(5) The primary magnesium ingots were added, and the temperature was added to 730-750°C, followed by alloying;
(6) Process components were tested and adjusted to set components;
(7) Argon gas with a purity of 99.993% or more was introduced for refining for 20 min, and pre-heated and dried Al-Ti-B bars were added 10 min before the refining stopped;
(8) Surface dross was removed, followed by standing and refining for 5-15 min, where the tested reduced pressure density was 2.782 g/cm³;
(9) The molten aluminum was controlled to be casted at 700-730°C into 6 Kg alloy ingots for re-melting, and billets were produced, where the cooling rate of the billets was 3.6°C/s;
(10) Thermal treatment of billets: solution treatment was performed at 515-525 °C (uniformity of a temperature field in a solution furnace ± 3°C), and the heat was preserved for 20 hours; workpieces were transferred for 15 s and cooled at a rate of about 11°C/s when the temperature of the workpieces was 300°C or more; and artificial aging treatment was performed at 175-185°C (uniformity of a temperature field in an aging furnace ± 3°C), and the heat was performed for 16 hours, followed by cooling in air.

### Comparative Example 1

This comparative example differed from Example 1 in that the Cu content was decreased to 3.5%.

### Comparative Example 2

This comparative example differed from Example 1 in that the Mn content was increased to 0.6%, and the T (Al₁₂Mn₂Cu) phase had a coarse structure and was aggregated, which reduced the mechanical properties of the alloy.

### Comparative Example 3

This comparative example differed from Example 1 in that the Si content was increased to 0.08%, Fe/Si was decreased from 3 to 1.5, and the thermal analysis curve showed that α (Al) + Si + Al₂Cu + W (AlₓCu₄Mg₅Si₄) quaternary eutectic reaction occurred at around 505°C, the structure was easily over-burned, the mechanical properties of the alloy were reduced, and the solidification temperature range and the hot cracking tendency increased.

### Comparative Example 4

This comparative example differed from Example 1 in that the Mg content was increased to 0.67%, and the thermal analysis curve showed that the solidus was decreased from 522°C to 514°C. Consequently, the theoretical solution treatment temperature was further lowered. It was tested by a constrained rod casting (CRC) method that the hot cracking index of the alloy increased from 359 to 684, about twice, indicating a significant increase in hot cracking tendency.

### Comparative Example 5

This comparative example differed from Example 1 in that Mg was not added.

### Comparative Example 6

This comparative example differed from Example 1 in that V was increased by 0.2%, resulting in a cost increase of approximately 6000 yuan/ton based on market prices at that time.

### Comparative Example 7

This comparative example differed from Example 1 in that the Mg content was decreased to 0.4%.

### Comparative Example 8

This comparative example differed from Example 1 in that the Si content was 0.15%.

### Performance test

The physical and chemical properties of the compositions prepared from the examples and comparative examples of the present invention were tested.

### 1. Test methods for tensile strength, yield strength, and elongation at room temperature:

1) The thermally treated tensile sample billets were turned into ϕ10mm tensile samples that met GB/T 228 standards;
2) According to the GB/T 228 standards, the tensile samples were subjected to room temperature tensile test on a tensile testing machine to obtain experimental data;
3) The fracture of each tensile sample was observed with a visual and stereo microscope. If there was an obvious casting or processing defect on the fracture of the sample, it was determined that the sample did not represent the true performance of the material, and the experimental data was invalid.

### 2. Test method for hardness:

1) The thermally treated tensile sample billets were processed into test samples that had one hardness and met GB/T231.1 standards;
2) According to the GB/T231.1 standards, the samples were subjected to room temperature hardness test on a hardness tester to obtain experimental data.

### 3. Test method for hot cracking index:

1) After the components and pinholes of the molten alloy met the requirements, the temperature was controlled at 720-730°C;
2) The samples were subjected to hot cracking test by a constrained rod casting (CRC) method in Q/BLZ 21-2019 Metal Quality Testing System Part 3: Specification for Operation and Use of Metal Mold Hot Cracking Mold, and testing, statistics, and calculation were performed.

**Table 2**

| Sample number | Tensile strength (MPa) | Yield strength (MPa) | Elongation (%) | Hardness (HB) | Hot cracking index (CRC) |
|---|---|---|---|---|---|
| Example 1 | 456 | 325 | 12.6 | 125 | 359 |
| Example 2 | 455 | 341 | 15.2 | 132 | 369 |
| Example 3 | 460 | 329 | 15.8 | 125 | 369 |
| Example 4 | 465 | 336 | 13.1 | 129 | 369 |
| Example 5 | 457 | 330 | 13.8 | 130 | 359 |
| Example 6 | 465 | 342 | 12.6 | 128 | 359 |
| Example 7 | 459 | 322 | 12.9 | 126 | 369 |
| Example 8 | 454 | 321 | 12.5 | 118 | 399 |
| Example 9 | 451 | 321 | 12.1 | 123 | 414 |
| Comparative Example 1 | 371 | 260 | 14.6 | 106 | 399 |
| Comparative Example 2 | 405 | 307 | 4.7 | 112 | 359 |
| Comparative Example 3 | 417 | 315 | 6.7 | 119 | 624 |
| Comparative Example 4 | 429 | 321 | 8.2 | 112 | 684 |
| Comparative Example 5 | 442 | 293 | 10.2 | 110 | 489 |
| Comparative Example 6 | 449 | 322 | 10.6 | 121 | 459 |
| Comparative Example 7 | 443 | 302 | 9.8 | 122 | 499 |
| Comparative Example 8 | 422 | 301 | 8.4 | 119 | 399 |

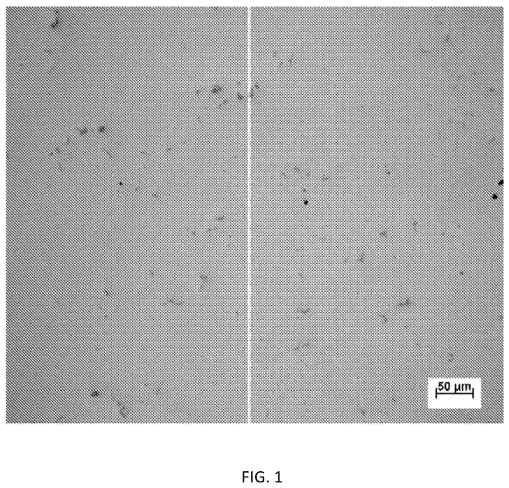

FIG. 1 shows a metallographic structure of sample T6 after treatment in Example 1 (optical microscope);

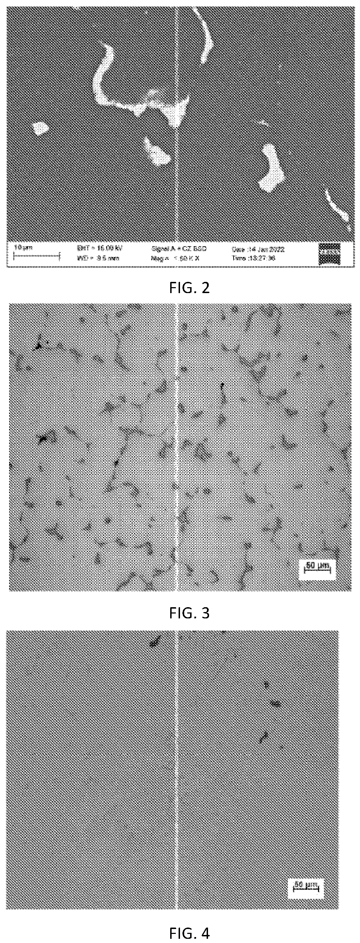

FIG. 2 shows a metallographic structure of sample T6 after treatment in Example 1 (scanning electron microscope);
FIG. 3 shows a cast metallographic structure of a sample in Example 1 (optical microscope);
FIG. 4 shows a metallographic structure of sample T6 after treatment in Comparative Example 2 (optical microscope);

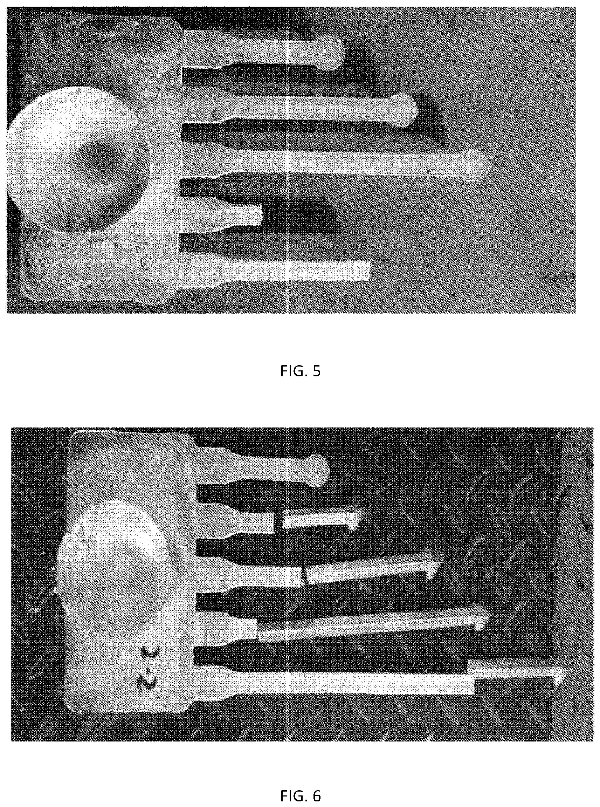

FIG. 5 shows an image of a hot cracking sample in Example 1;
FIG. 6 shows an image of a hot cracking sample in Comparative Example 4;

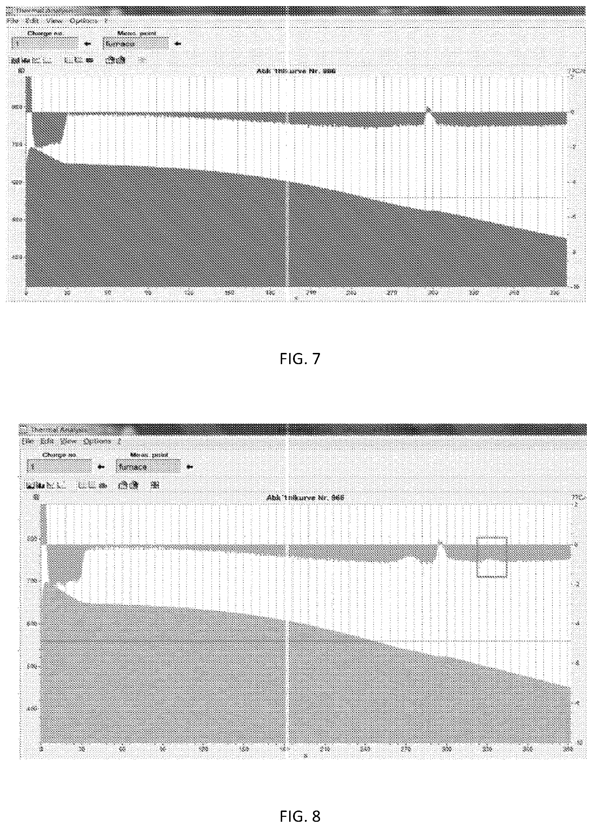

FIG. 7 shows a thermal analysis diagram in Example 1 (Si 0.05, solidus 522°C);
FIG. 8 shows a thermal analysis diagram in Comparative Example 3 (Si 0.08, Fe/Si = 1.5, solidus 505°C); and

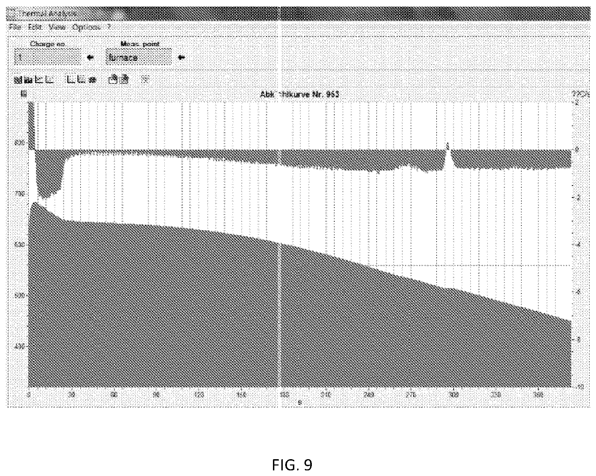

FIG. 9 shows a thermal analysis diagram in Comparative Example 4 (Mg 0.67, solidus 513.7°C).

The specific examples of the present invention are described above. The examples of the present application and the features in the examples may be arbitrarily combined with each other on a non-conflict basis.

### Industrial Applicability

The high-strength and high-toughness Al-Cu series cast aluminum alloy and the preparation method therefor in the present invention have low cost and strong process inclusiveness, satisfy the market requirements on aluminum alloy parts such as vehicle wheel hubs, and therefore are of important significance in accelerating weight reduction of vehicles and achieving the objects of energy conservation and emission reduction.

## Claims

1. A high-strength and high-toughness Al-Cu series cast aluminum alloy, wherein the chemical components of the high-strength and high-toughness Al-Cu series cast aluminum alloy comprise the following elements in percentage by mass: 4.6-5.3% of Cu, 0.45-0.55% of Mn, 0.42-0.55% of Mg, 0.15-0.25% of Ti, 0.05-0.15% of Zr, and 0.003-0.011% of B; wherein the mass ratio of Cu: Mg is (8-12): 1 and
the chemical components further comprise Fe and Si, wherein 0.03 < Fe ≤ 0.2% and the mass ratio of Fe: Si is (2-6): 1 and the Si content is less than 0.08%; and the balance being Al and inevitable impurities, wherein
the impurities comprise: V ≤ 0.05%, Ga ≤ 0.03%, Ni ≤ 0.01%, Zn ≤ 0.03%, P ≤ 0.002%, Be ≤ 0.0008%, and Sn ≤ 0.01%.

2. A preparation method for the high-strength and high-toughness Al-Cu series cast aluminum alloy according to claim 1, comprising the following steps:
A. selecting raw materials, the raw materials of the high-strength and high-toughness Al-Cu series cast aluminum alloy being selected from the following materials: aluminum, copper, manganese, magnesium, Al-Cu intermediate alloy, Al-Mn intermediate alloy, Al-Mg intermediate alloy, Al-Ti intermediate alloy, Al-Zr intermediate alloy, Al-Ti-B intermediate alloy, Al-B intermediate alloy, K₂TiF₆, KBF₄, and K₂ZrF₆;
calculating and weighing the amount of each raw material according to predetermined alloy components, melting and casting the raw materials to obtain alloy ingots or bars, and producing billets; and
B. thermally treating and cooling in air the billets to obtain the high-strength and high-toughness Al-Cu series cast aluminum alloy.

3. The preparation method according to claim 2, wherein step A specifically comprises the following steps:
A1. melting and alloying aluminum, copper, and Al-Mn intermediate alloy, heating the molten alloy to 750-770°C, and preserving the heat for 30-60 min;
A2. adding Al-Ti intermediate alloy and Al-Zr intermediate alloy, adjusting the temperature to 740-750°C, and alloying;
A3. removing slag and refining with a refining agent;
A4. adding magnesium, adjusting the temperature to 730-750°C, and alloying;
A5. introducing inert gas for refining for 15-30 min, and adding pre-heated and dried Al-Ti-B intermediate alloy 8-10 min before the refining stops to prepare molten alloy; and
A6. controlling the molten alloy to be cast into alloy ingots at 700-730°C, producing billets, and controlling the cooling rate of the billets at 0.5-10°C/s.

4. The preparation method according to claim 2, wherein the thermal treatment of the sample billets in step B specifically comprises: first performing solution treatment on the billets at 515-525°C and preserving the heat for 8-20 hours; then performing artificial aging treatment at 175-185°C, preserving the heat for 4-20 hours, and then cooling in air.

5. A use of the high-strength and high-toughness Al-Cu series cast aluminum alloy according to claim 1 in wheel hub manufacturing.

## Patentansprüche

1. Eine Aluminiumgusslegierung der Al-Cu-Serie mit hoher Festigkeit und hoher Zähigkeit, wobei die chemischen Komponenten der Aluminiumgusslegierung der Al-Cu-Serie mit hoher Festigkeit und hoher Zähigkeit die folgenden Elemente in Massenprozent beinhalten: 4,6-5,3 % Cu, 0,45-0,55 % Mn, 0,42-0,55 % Mg, 0,15-0,25 % Ti, 0,05-0,15 % Zr und 0,003-0,011 % B; wobei das Massenverhältnis von Cu : Mg (8-12) : 1 beträgt und
die chemischen Komponenten ferner Fe und Si beinhalten, wobei 0,03 < Fe ≤ 0,2 % und das Massenverhältnis von Fe : Si (2-6) : 1 beträgt und der Si-Gehalt weniger als 0,08 % beträgt; und der Rest Al und unvermeidbare Verunreinigungen ist, wobei
die Verunreinigungen Folgendes beinhalten: V ≤ 0,05 %, Ga ≤ 0,03 %, Ni ≤ 0,01 %, Zn ≤ 0,03 %, P ≤ 0,002 %, Be ≤ 0,0008 % und Sn ≤ 0,01 %.

2. Ein Herstellungsverfahren für die Aluminiumgusslegierung der Al-Cu-Serie mit hoher Festigkeit und hoher Zähigkeit gemäß Anspruch 1, das die folgenden Schritte beinhaltet:
A. Auswählen von Rohmaterialien, wobei die Rohmaterialien der Aluminiumgusslegierung der Al-Cu-Serie mit hoher Festigkeit und hoher Zähigkeit aus den folgenden Materialien ausgewählt sind: Aluminium, Kupfer, Mangan, Magnesium, Al-Cu-Zwischenlegierung, Al-Mn-Zwischenlegierung, Al-Mg-Zwischenlegierung, Al-Ti-Zwischenlegierung, Al-Zr-Zwischenlegierung, Al-Ti-B-Zwischenlegierung, Al-B-Zwischenlegierung, K₂TiF₆, KBF₄ und K₂ZrF₆; Berechnen und Wiegen der Menge jedes Rohmaterials gemäß vorbestimmten Legierungskomponenten, Schmelzen und Gießen der Rohmaterialien, um Legierungsbarren oder -stäbe zu erhalten, und Herstellen von Blöcken; und
B. Wärmebehandeln und Kühlen der Blöcke in Luft, um die Aluminiumgusslegierung der Al-Cu-Serie mit hoher Festigkeit und hoher Zähigkeit zu erhalten.

3. Herstellungsverfahren gemäß Anspruch 2, wobei Schritt A insbesondere die folgenden Schritte beinhaltet:
A1. Schmelzen und Legieren von Aluminium, Kupfer und Al-Mn-Zwischenlegierung, Erwärmen der geschmolzenen Legierung auf 750-770 °C und Halten der Wärme für 30-60 min;
A2. Zugeben von Al-Ti-Zwischenlegierung und Al-Zr-Zwischenlegierung, Einstellen der Temperatur auf 740-750 °C und Legieren;
A3. Entfernen von Schlacke und Läutern mit einem Läutermittel;
A4. Zugeben von Magnesium, Einstellen der Temperatur auf 730-750 °C und Legieren;
A5. Einleiten von Inertgas zum Läutern für 15-30 min und Zugeben von vorgewärmter und getrockneter Al-Ti-B-Zwischenlegierung, 8-10 min bevor das Läutern stoppt, um geschmolzene Legierung herzustellen; und
A6. Steuern der zu Legierungsbarren zu gießenden geschmolzenen Legierung bei 700-730 °C, Herstellen von Blöcken und Steuern der Kühlrate der Blöcke bei 0,5-10 °C/s.

4. Herstellungsverfahren gemäß Anspruch 2, wobei die Wärmebehandlung der Probenblöcke in Schritt B insbesondere Folgendes beinhaltet: zuerst Durchführen einer Lösungsbehandlung an den Blöcken bei 515-525 °C und Halten der Wärme für 8-20 Stunden; dann Durchführen einer künstlichen Alterungsbehandlung bei 175-185 °C, Halten der Wärme für 4-20 Stunden und dann Kühlen in Luft.

5. Eine Verwendung der Aluminiumgusslegierung der Al-Cu-Serie mit hoher Festigkeit und hoher Zähigkeit gemäß Anspruch 1 in der Radnabenherstellung.

## Revendications

1. Un alliage d'aluminium coulé de la série Al-Cu à haute résistance et à haute ténacité, dans lequel les constituants chimiques de l'alliage d'aluminium coulé de la série Al-Cu à haute résistance et à haute ténacité comprennent les éléments suivants en pourcentage en masse : 4,6 à 5,3 % de Cu, 0,45 à 0,55 % de Mn, 0,42 à 0,55 % de Mg, 0,15 à 0,25 % de Ti, 0,05 à 0,15 % de Zr, et 0,003 à 0,011 % de B ; dans lequel le rapport en masse de Cu:Mg est (8 à 12):1 et
les constituants chimiques comprennent en outre du Fe et du Si, dans lequel 0,03 < Fe ≤ 0,2 % et le rapport en masse de Fe:Si est (2 à 6):1 et la teneur en Si est inférieure à 0,08 % ; et le reste étant de l'AI et des impuretés inévitables, dans lequel
les impuretés comprennent : V ≤ 0,05 %, Ga ≤ 0,03 %, Ni ≤ 0,01 %, Zn ≤ 0,03 %, P ≤ 0,002 %, Be ≤ 0,0008 %, et Sn ≤ 0,01 %.

2. Un procédé de préparation pour l'alliage d'aluminium coulé de la série Al-Cu à haute résistance et à haute ténacité selon la revendication 1, comprenant les étapes suivantes :
A. sélection de matières premières, les matières premières de l'alliage d'aluminium coulé de la série Al-Cu à haute résistance et à haute ténacité étant sélectionnées parmi les matières suivantes : aluminium, cuivre, manganèse, magnésium, alliage intermédiaire Al-Cu, alliage intermédiaire Al-Mn, alliage intermédiaire Al-Mg, alliage intermédiaire Al-Ti, alliage intermédiaire Al-Zr, alliage intermédiaire Al-Ti-B, alliage intermédiaire Al-B, K₂TiF₆, KBF₄, et K₂ZrF₆ ;
calcul et pesage de la quantité de chaque matière première selon des constituants d'alliage prédéterminés, fusion et coulée des matières premières afin d'obtenir des lingots ou barres d'alliage, et production de billettes ; et
B. traitement thermique et refroidissement à l'air des billettes afin d'obtenir l'alliage d'aluminium coulé de la série Al-Cu à haute résistance et à haute ténacité.

3. Le procédé de préparation selon la revendication 2, dans lequel l'étape A comprend spécifiquement les étapes suivantes :
A1. fusion et alliage d'aluminium, de cuivre, et d'alliage intermédiaire Al-Mn, chauffage de l'alliage fondu à 750 à 770 °C, et maintien de la chaleur pendant 30 à 60 min;
A2. ajout d'alliage intermédiaire Al-Ti et d'alliage intermédiaire Al-Zr, ajustement de la température à 740 à 750 °C, et alliage ;
A3. élimination de scories et affinage avec un agent d'affinage ;
A4. ajout de magnésium, ajustement de la température à 730 à 750 °C, et alliage ;
A5. introduction de gaz inerte pour affinage pendant 15 à 30 min, et ajout d'un alliage intermédiaire Al-Ti-B préchauffé et séché 8 à 10 min avant l'arrêt de l'affinage afin de préparer un alliage fondu ; et
A6. contrôle de l'alliage fondu à couler en lingots d'alliage à 700 à 730 °C, production de billettes, et contrôle de la vitesse de refroidissement des billettes à 0,5 à 10 °C/s.

4. Le procédé de préparation selon la revendication 2, dans lequel le traitement thermique des billettes d'échantillon à l'étape B comprend spécifiquement : premièrement, réalisation d'un traitement de mise en solution sur les billettes à 515 à 525 °C et maintien de la chaleur pendant 8 à 20 heures ; ensuite, réalisation d'un traitement de vieillissement artificiel à 175 à 185 °C, maintien de la chaleur pendant 4 à 20 heures, et ensuite refroidissement à l'air.

5. Une utilisation de l'alliage d'aluminium coulé de la série Al-Cu à haute résistance et à haute ténacité selon la revendication 1 dans la fabrication de moyeux de roue.
